# EUROPEAN PATENT APPLICATION

(11) **EP 4 722 027 A1**
(43) Date of publication of application: **08.04.2026**
(21) Application number: 25206525.5
(22) Date of filing: 02.10.2025
(51) Int. Cl.: B60L 53/63, H02J 3/14, H02J 3/17, H02J 13/12, H02J 13/333, H02J 3/175, H02J 13/14, H02J 13/182

(54) **HIERARCHICAL DISTRIBUTED CONTROL OF DISTRIBUTED ENERGY RESOURCES (DERS)**

(30) Priority: 04.10.2024 US 202463703730 P; 18.08.2025 US 202519303059
(71) Applicant: Itron, Inc., Liberty Lake, WA 99019 (US)
(72) Inventor: TEHRANI, Nima, Liberty Lake, 99019 (US); YOUNG, Eric, Liberty Lake, 99019 (US); DRISCOLL, Timothy James, Liberty Lake, 99019 (US); MONFORTE, Frank Anthony, Liberty Lake, 99019 (US)
(74) Representative: Finlayson, Scott Henry

(57) **Abstract**

Techniques for allocating a load capacity to on-site smart sensors coupled to distributed energy resources (DERs) are described herein. For example, a primary smart sensor may receive, from a utility supplier (e.g., which may include a substation), a maximum load constraint associated with a network of smart utility sensors in an autonomous routing area. The maximum load constraint may be a maximum load and/or maximum capacity that the network of smart utility sensors may collectively operate with by a transformer carrying the load. In some examples, the primary smart sensor may receive utility data from the smart sensors and may determine a total transformer load associated with the transformer that is providing power to the network of smart utility sensors based at least in part on the utility data.

## Description

### CROSS-REFERENCE TO RELATED APPLICATIONS

This application claims priority to U.S. Provisional Application No. 63/703,730, titled "Hierarchical Distributed Control of Distributed Energy Resources (DERS)," filed October 4, 2024, which is hereby incorporated by reference in its entirety.

### BACKGROUND

Utility meters such as electric, water, and natural gas meters have evolved from isolated devices that simply measure utility consumption and display a consumption reading to so called "smart meters" that are connected devices capable of reporting resource consumption readings automatically over a utility communication network. Conventional utility communication networks have been large, centrally managed private networks. More recently there have been efforts to decentralize networks and distribute more functionality down the network (e.g., closer to the edge) to be performed by individual nodes (e.g., smart meters, routers, relays, transformers, etc.) throughout the networks. In some examples, distributed and/or decentralized networks can reduce latency of communication by reducing the distance information must travel to be acted upon by relevant devices, and/or can make networks more robust against failure of individual nodes in the network. However, to date, decentralization and distribution of computing among network nodes have been limited by, for example, security concerns, accuracy of individual nodes, computing power of individual nodes, and regulatory requirements

### BRIEF DESCRIPTION OF THE DRAWINGS

The detailed description is described with reference to the accompanying figures. In the figures, the left-most digit(s) of a reference number identify the figure in which the reference number first appears. The same reference numbers in different figures indicate similar or identical items.
FIG. 1 is a schematic diagram of an example architecture including a primary smart sensor usable to allocate a load capacity associated with one or more smart utility meters, smart sensors, or other network computing devices.
FIG. 2 is a block diagram illustrating details of the example primary smart sensor of FIG. 1.
FIG. 3 is a block diagram illustrating details of one of the example smart sensors of FIG. 1.
FIG. 4 is a schematic diagram of an example architecture including a primary smart sensor usable to allocate a load capacity associated with one or more smart utility meters, smart sensors, or other network computing devices.
FIG. 5 illustrates another example process for allocating load capacity for one or more sensors.
FIG. 6 illustrates another example process for allocating load capacity for one or more sensors.

### DETAILED DESCRIPTION

Systems and methods are discussed herein including effectively addressing scalability, complexity, and speed challenges associated with distributed energy resources (DERs) and distributed generation systems. Proliferation of DERs (e.g., electric vehicle supply equipment (EVSE)) is increasing and may need to be integrated into existing utility systems. In some regions, there may be a significant barrier to DER adoption due to service upgrade requirements at an installation site of the DER or the utility system to which the site is connected. Upgrading utility (e.g., electrical, water, gas, etc.) services may trigger additional out-of-pocket costs and may delay adoption and/or installation of DERs. The utility provider may need the ability to monitor and actively control these behind-the-meter (BTM) DERs to improve DER hosting capacity and integration into the utility system network. Discussed herein is a hierarchical three-layer distributed control approach for distribution system line protection using substation and medium-voltage protection provided by central control, transformer protection and shared secondary line protection performed by a primary smart sensor (e.g., smart utility meter), and premise-level and service drop protection provided by on-site sensors.

In some cases, the primary smart sensor may be configured to allocate a load capacity to the on-site smart sensors. For example, the primary smart sensor may receive, from a utility supplier (e.g., which may include a substation), a maximum load constraint associated with a network of smart utility sensors in an autonomous routing area. The maximum load constraint may be a maximum load and/or maximum capacity that the network of smart utility sensors may collectively operate with by a transformer carrying the load. In some cases, the maximum load constraint may be determined based on one or more factors, such as temperature, (e.g., transformers generate heat during operation due to resistive losses and core losses), cooling methods (e.g., the cooling system (such as air, oil, or water cooling) determines how effectively heat is dissipated and transformers with better cooling mechanisms can handle higher loads), voltage regulation (e.g., as load increases, voltage drop occurs due to impedance in the windings and if the voltage drop is excessive, the transformer may not be able to supply the required voltage to the load), core saturation (e.g., transformers are designed for specific magnetic flux levels and if the load increases beyond a certain point, the magnetic core can become saturated, leading to increased losses and potential damage), load type (e.g., the nature of the load (resistive, inductive, or capacitive) affects how the transformer operates and inductive loads, for example, can cause additional heating and losses), short-circuit current (e.g., the ability of the transformer to withstand short-circuit without damage), regulatory and safety standards, etc. In some cases, the maximum load constraint may be specified as a kilo-volt-amperes (kVA) rating, which reflects the transformer's capacity to handle both active and reactive power while in operation with the network of smart utility sensors without exceeding these limitations.

In some examples, the primary smart sensor may receive utility data from the smart sensors and may determine a total transformer load associated with the transformer that is providing power to the network of smart utility sensors based at least in part on the utility data. For example, receiving the utility data may include receiving data associated with electricity metering devices associated with the network of smart utility meters, a distributed generation system, electric vehicle (EV) telematics of an EV connected to an electrical grid, an EV supply equipment (EVSE) associated with the electrical grid, etc. In some cases, receiving the utility data may include receiving present electricity consumption data associated with the network of smart utility meters, historical electricity consumption data associated with the network of smart utility meters, present electricity generation data associated with a distributed generation system, historical electricity generation data associated with the network of smart utility meters, etc.

In some examples, the primary smart sensor may determine a remaining transformer capacity associated with the transformer based at least in part on the maximum load constraint and the total transformer load. For example, the primary smart sensor may calculate a difference between the maximum load constraint and the total transformer load. In some cases, the primary smart sensor may determine an allocated capacity for each smart sensor based at least in part on the remaining transformer capacity and the primary smart sensor may send the allocated capacity to the individual ones of the smart sensors. In some cases, the allocated capacity sent to each smart sensor may cause the smart sensors to reduce a charging load of an electric vehicle supply equipment (EVSE) or increase the charging load of the EVSE.

### Example Utility System

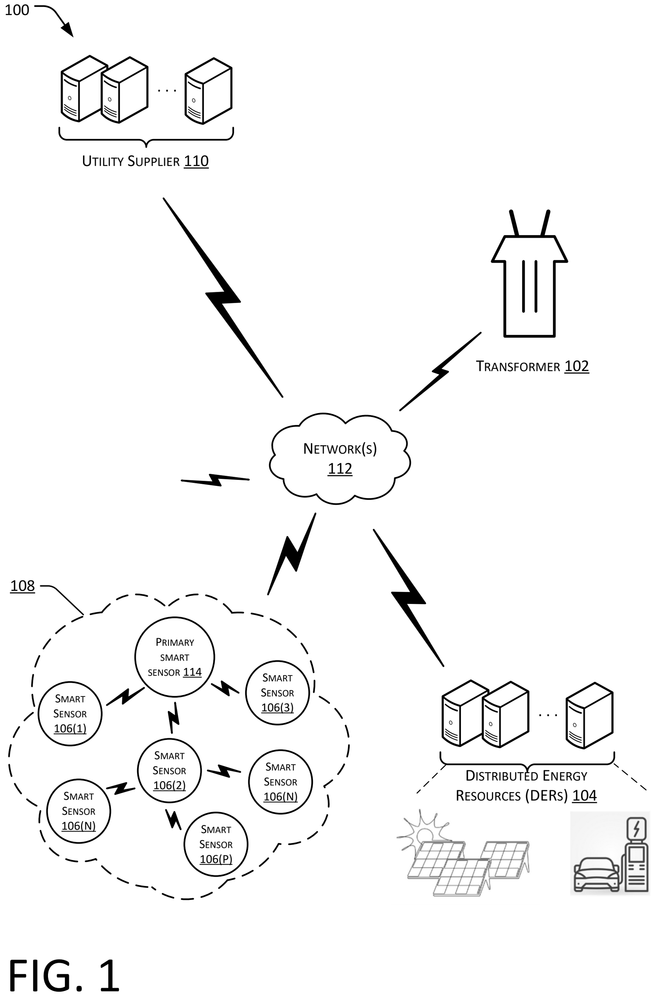

FIG. 1 is a diagram illustrating an example networked environment or architecture 100 including one or more utility meters or other smart sensors 106(1), 106(2), 106(3), ... 106(N) (collectively referred to as "smart sensors 106"), where N is any integer greater than or equal to 1. The term "smart sensor" means a measuring and/or sensing equipment which measures or senses physical parameters (e.g., energy, power, voltage, power factor, temperature, gas pressure, flow rate, etc.) and has the ability to communicate this information via a network. By way of example and not limitation, smart sensors may include utility meters (e.g., electricity, water, or gas meters), relays, repeaters, smart grid routers, transformers or any such utility network computing device. In the illustrated example, the smart sensors 106 are arranged in a mesh network defining an autonomous routing area 108. However, in other examples, the meters may be arranged in a star network or other network topology. Regardless of the topology of the autonomous routing area 108, individual smart sensors or "meter nodes" may be in communication by wireless (e.g., radio frequency) and/or wired (e.g., power line communication, Ethernet, serial, etc.) connections. There may be any number of autonomous routing areas 108(N), where N is any integer greater than or equal to 1. The smart sensors 106 may be configured to collect information (e.g., resource consumption information, network traffic information, weather information, etc.) and to report the collected information to a utility supplier 110 via a wired or wireless network 112, such as the Internet, a cellular network, or the like. The network 112 may itself be made up of one or more other wired and/or wireless networks. In the illustrated example, a primary smart sensor 114 acts as a root or edge node of the autonomous routing area 108 to relay communications from other smart sensors 106 in the autonomous routing area 108 to the utility supplier 110 over the network.

In some cases, the smart sensors 106 may be coupled to one or more distributed energy resources (DERs) 104 such as distributed generation systems. In some cases, the DERs 104 may include a photovoltaic (PV) system as a distributed generation system comprising a solar power panel, a PV battery module, and an inverter. The inverter may direct electricity generated by the solar power panel to the premises for consumption, to the PV battery module for storage, and/or to the electrical grid. The inverter may also direct the stored electricity from the PV battery module to the premises, under some circumstances, such as during a power outage, for consumption at the premises. Additionally, or alternatively, the inverter may also direct, or be instructed to direct, the stored electricity from the PV battery module to the electrical grid during a peak demand period. In some cases, the DERs 104 may additionally or alternatively include a battery backup system as a distributed generation system comprising a backup battery module (which may be the same as or distinct from the PV battery module described above) and an inverter. The inverter may normally direct electricity from the electrical grid to the backup battery module for storage during a scheduled time period, for example, corresponding to non-peak hours, and may direct the stored electricity from the backup battery module to the premises, under some circumstances, such as during a power outage, for consumption at the premises in which the inverter is located. Additionally, or alternatively, the inverter may also direct, or be instructed to direct, the stored electricity from the backup battery module to the electrical grid during a peak demand period.

In some cases, the DERs may include an electric vehicle supply equipment (EVSE) as a distributed generation system. The EVSE may charge an electric vehicle (EV) when the EVSE is plugged into an EV. Additionally, or alternatively, the EVSE may charge the EV based on a charging schedule. For example, while the EVSE is plugged into EV, the EVSE may become active only during a scheduled time, such as during non-peak hours (between 10 pm and 6 am for example), to charge the EV. The EVSE may also be set to charge the EV at a certain battery charging rate and/or when the cost of electricity, such as $/kWh, is below a preselected cost. Additionally, or alternatively, the EVSE may also direct, or be instructed to direct, the stored electricity from a battery or batteries of the EV to the electrical grid during a peak demand period.

In some cases, the primary smart sensor 114 may be configured to allocate a load capacity to the smart sensors 106. For example, the primary smart sensor 114 may receive, from the utility supplier (e.g., which may include a substation), a maximum load constraint associated with a network of smart utility meters (e.g., the autonomous routing area 108). In some examples, the primary smart sensor 114 may receive utility data from the smart sensors 106 and may determine a total transformer load associated with the transformer 102 based at least in part on the utility data. In some examples, the primary smart sensor 114 may determine a remaining transformer capacity associated with the transformer 102 based at least in part on the maximum load constraint and the total transformer load. For example, the primary smart sensor 114 may calculate a difference between the maximum load constraint and the total transformer load. In some cases, the primary smart sensor 114 may determine an allocated capacity for each smart sensor 106 based at least in part on the remaining transformer capacity and the primary smart sensor 114 may send the allocated capacity to the individual ones of the smart sensors 106.

### Example Primary Smart Sensor

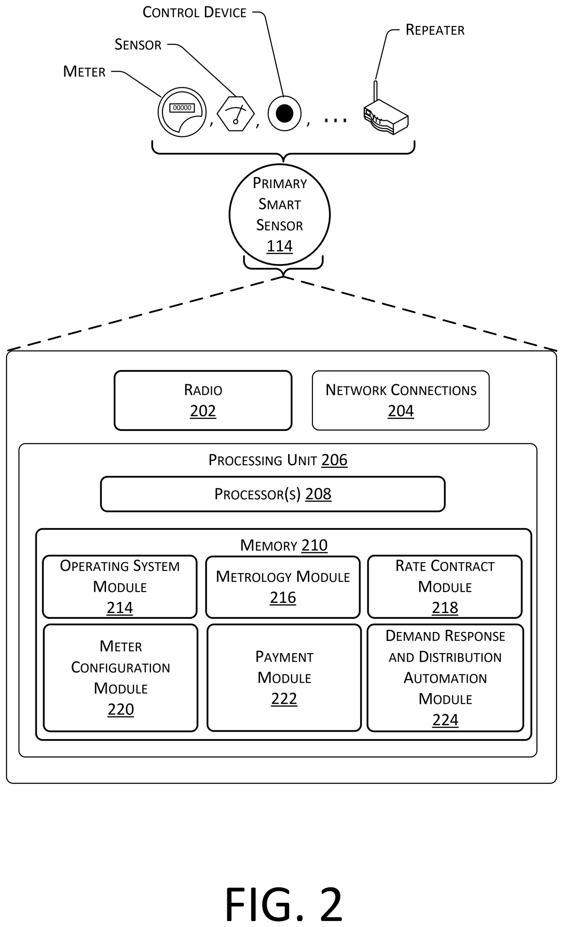

FIG. 2 is a diagram showing example details of an individual primary smart sensor 114. As discussed above, the primary smart sensor may comprise a smart sensor (e.g., electricity meter, water meter, or gas meter), a relay, a repeater, a smart grid router, a transformer, a shard node, or any other utility network computing device. The primary smart sensor 114 may be configured for the utility supplier 110, the DERs 104, the transformer 102, and the smart sensors 106, as well as potentially other computing devices (e.g., consumer computing devices, utility network computing devices, web servers, and the like).

As shown in the example of FIG. 2, the primary smart sensor 114 may include a radio 202, network connections 204, and a processing unit 206. The radio 202 may provide two-way RF communication with other primary smart sensor s 114 and/or smart sensors 106 in the autonomous routing area 108 and/or other computing devices via the network 112. The processing unit 206 may include one or more processors 208 and memory 210 and/or other hardware device(s), such as an application specific integrated circuit (ASIC), a gate array or other hardware-based logic device. The memory 210 may include an operating system (OS) 214.

In embodiments in which the primary smart sensor 114 comprises a utility meter, the primary smart sensor 114 may include a metrology module 216 configured to receive consumption data of a resource (e.g., electricity, water, or gas) at a site of the meter. The metrology module 216 may report the consumption data to the utility supplier 110 by RF transmission via the radio 202. The consumption data may be formatted and/or packetized in a manner or protocol for transmission over the utility communication network.

In embodiments in which the primary smart sensor 114 comprises a utility meter, a rate contract module 218 may be configured to store a rate contract associated with the primary smart sensor 114 and to receive updates to the rate contract. For instance, the primary smart sensor 114 may receive transaction details regarding a rate contract and, in response, the primary smart sensor 114 may apply the new rules of the new and/or updated rate contract via the rate contract module 218. The rate contract may specify an identifier of the primary smart sensor 114, a type of the primary smart sensor 114, a bill rate based on a time of day, a bill rate based on a forward consumption of a resource, a bill rate based on a reverse consumption of a resource, a bill rate based on a peak demand, a bill rate based on a power factor, a bill rate based on a class of customer, and/or a bill rate based on a type of payee. Alternatively, the rate contract may specify one of the smart sensors 106 within autonomous routing area 108 and the primary smart sensor may send a transmission to the specified smart sensor 106 indicating the adjustment to the rate contract.

In embodiments in which the primary smart sensor 114 comprises a utility meter, a meter configuration module 220 may be configured to store meter configuration data associated with the primary smart sensor 114. For instance, the primary smart sensor 114 may receive transaction details regarding meter configuration data and in response, the primary smart sensor 114 may apply the meter configurations via the meter configuration module 220. The meter configurations may specify an identifier of the primary smart sensor 114, a type of the primary smart sensor 114, a software update, a channel hopping sequence, a data rate, a signal strength, and/or a communication protocol. Alternatively, the meter configuration data may specify one of the smart sensors 106 within autonomous routing area 108 and the primary smart sensor 114 may send a transmission to the specified smart sensor 106 indicating the transaction details.

In embodiments in which the primary smart sensor 114 comprises a utility meter, a payment module 222 may be configured to perform payment transactions and store a balance associated with the primary smart sensor 114. For instance, the primary smart sensor 114 may receive payment transaction that may include a transfer of funds into the balance associated with the primary smart sensor 114. In response, the primary smart sensor 114 may apply the funds to the balance via the payment module 222. The payment transaction may specify an identifier of the primary smart sensor 114 and/or an amount of funds to be applied. The funds may be in the form of a currency such as a cryptocurrency, fiat, a token, etc. Alternatively, the payment transaction may specify one of the smart sensors 106 within autonomous routing area 108 and the primary smart sensor may send a transmission to the specified smart sensor 106 indicating the payment and/or transaction.

A demand response and distribution automation module 224 may be configured to enable initiation of a demand response or distribution automation event. For instance, the primary smart sensor 114 may receive load data from a plurality of smart sensors 106 that are within the autonomous routing area 108. The load data may include disaggregated load information for a plurality of loads that are receiving a resource at a respective site of each smart sensor. The demand response and distribution automation module 224 may catalog the load data and prioritize loads that can be shed. For instance, the demand response and distribution automation module 224 may determine which loads can be turned off without endangering the consumer (e.g., washing machine, dryer, dishwasher, etc.) and which loads may need to be kept on for safety reasons (e.g., heater, air conditioning, water pump, etc.). The primary smart sensor 114 may receive a transmission from the utility supplier 110 indicating that a demand response event has been initiated. The primary smart sensor 114 may then determine which loads of the plurality of loads need to be shed in order to satisfy the demand response requirement. For instance, the demand response may include an amount of resource that the utility supplier 110 requires to be shed. The demand response and distribution automation module 224 may determine which loads to shed in order to meet that amount. In response to the primary smart sensor 114 receiving an instruction to perform the demand response event, the primary smart sensor 114 may transmit a signal to the one or more smart sensors 106 causing the one or more smart sensors 106 to reflect that the demand response event has been initiated.

In some examples, the primary smart sensor 114 may be configured to receive data (e.g., voltage, current, gas flow, water flow etc.) collected by the smart sensors 106 at a site associated with each smart sensor 106 to determine if the site is experiencing a resource related event. The demand response and distribution automation module 224 may be configured to enable the primary smart sensor 114 to operate industrial controls within its autonomous routing area 108. For instance, the demand response and distribution automation module 224 may be configured to use onboard machine learning techniques to monitor and optimize the local circuit to identify power consumption and voltage patterns within its local circuit. In some examples, the demand response and distribution automation module 224 may be configured to autonomously manage voltage levels along the circuit by changing a tap on a multi-tap transformer or dispatching capacitance from a capacitor bank. Acting in concert, the primary smart sensor s 114 may communicate data regarding power quality on their respective local circuits and operate industrial controls to route excess power from one neighbor circuit to another circuit experiencing high demand.

### Example Smart Sensor

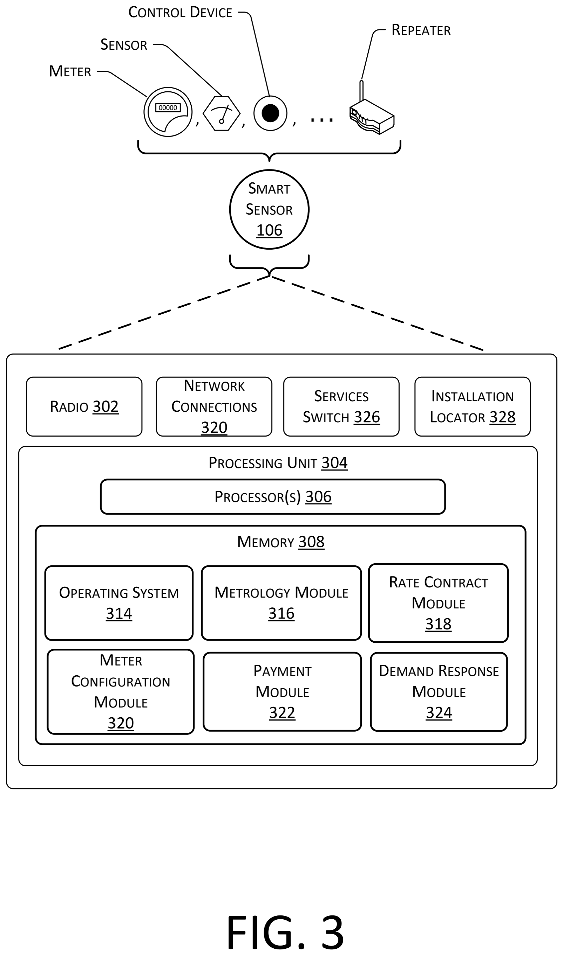

FIG. 3 is a diagram showing example details of an individual smart sensor 106. As discussed above, the smart sensor 106 may comprise a smart utility meter (e.g., electricity meter, water meter, or gas meter), a relay, a repeater, a smart grid router, a transformer, or any other utility network computing device. The smart sensor 106 may be configured for interaction with the utility supplier 110, the smart sensor 106(P), the primary smart sensor 114, as well as potentially other computing devices (e.g., consumer computing devices, utility network computing devices, web servers, and the like).

As shown in the example of FIG. 3, the smart sensor 106 may include a radio 302, a processing unit 304, a services switch 326, and an installation locator 328. The radio 302 may provide two-way RF communication with other smart sensors 106 or the primary smart sensor 114 in the autonomous routing area 108 and/or other computing devices via the network 112. The installation locator 328 may include an RFID tag. The processing unit 304 may include one or more processors 306 and memory 308 and/or other hardware device(s), such as an application specific integrated circuit (ASIC), a gate array or other hardware-based logic device. The memory 308 may include an operating system (OS) 314.

In embodiments in which the smart sensor 106 comprises a utility meter, the smart sensor 106 may include a metrology module 316 configured to receive consumption data of a resource (e.g., electricity, water, or gas) at a site of the meter. The metrology module 316 may report the consumption data to the utility supplier 110 by RF transmission via the radio 302. The consumption data may be formatted and/or packetized in a manner or protocol for transmission over the utility communication network.

A rate contract module 318 may be configured to store a rate contract associated with the smart sensor 106 and to receive updates to the rate contract from the primary smart sensor 114. For instance, the smart sensor 106 may apply the new rules of the new and/or updated rate contract via the rate contract module 318. The rate contract may specify an identifier of the smart sensor 106, a type of the smart sensor 106, a bill rate based on a time of day, a bill rate based on a forward consumption of a resource, a bill rate based on a reverse consumption of a resource, a bill rate based on a peak demand, a bill rate based on a power factor, a bill rate based on a class of customer, and/or a bill rate based on a type of payee.

A meter configuration module 320 may be configured to store meter configuration data associated with the smart sensor 106 and to receive updates to the meter configurations from the primary smart sensor 114. For instance, the smart sensor 106 may apply the meter configurations via the meter configuration module 320. The meter configurations may specify an identifier of the smart sensor 106, a type of the smart sensor 106, a software update, a channel hopping sequence, a data rate, a signal strength, and/or a communication protocol.

A payment module 322 may be configured to perform payments transactions and store a balance associated with the smart sensor 106. For instance, the payment transaction may include a transfer of funds into the balance associated with the smart sensor 106. In response, the smart sensor 106 may apply the funds to the balance via the payment module 322. The payment transaction may specify an identifier of the smart sensor 106 and/or an amount of funds to be applied. The funds may be in the form of a currency such as a cryptocurrency, fiat, a token, etc. In some instances, if the balance of the smart sensor 106 falls below a threshold, then the smart sensor 106 may refrain from providing a resource to, or alter an amount of resource provided to, a site associated with the user by disconnecting the services switch 326. In some examples, the smart sensor 106 may be configured to determine a temperature at the site (e.g. via a thermometer (not shown) or via communication to a weather service via network 112) and the smart sensor 106 may continue to provide the resource to the site if the temperature is below or above a predefined threshold.

A demand response module 324 may be configured to enable initiation of a demand response event. For instance, the demand response module 324 of the smart sensor 106 may determine load data that includes disaggregated load information for a plurality of loads that are receiving a resource at a site associated with the smart sensor 106. The smart sensor 106 may provide the load data to the primary smart sensor 114. The smart sensor 106 may receive information detailing which loads of the plurality of loads to refrain from providing the resource too (i.e., shed) and for how long to refrain from providing the resource. For example, the smart sensor 106 may receive the information from one or more of the primary smart sensor 114, the utility supplier 110, the DERs 104, the transformer 102, or another smart sensors 106, as well as potentially other computing devices (e.g., consumer computing devices, utility network computing devices, web servers, and the like)..

### Example Utility System Hierarchy

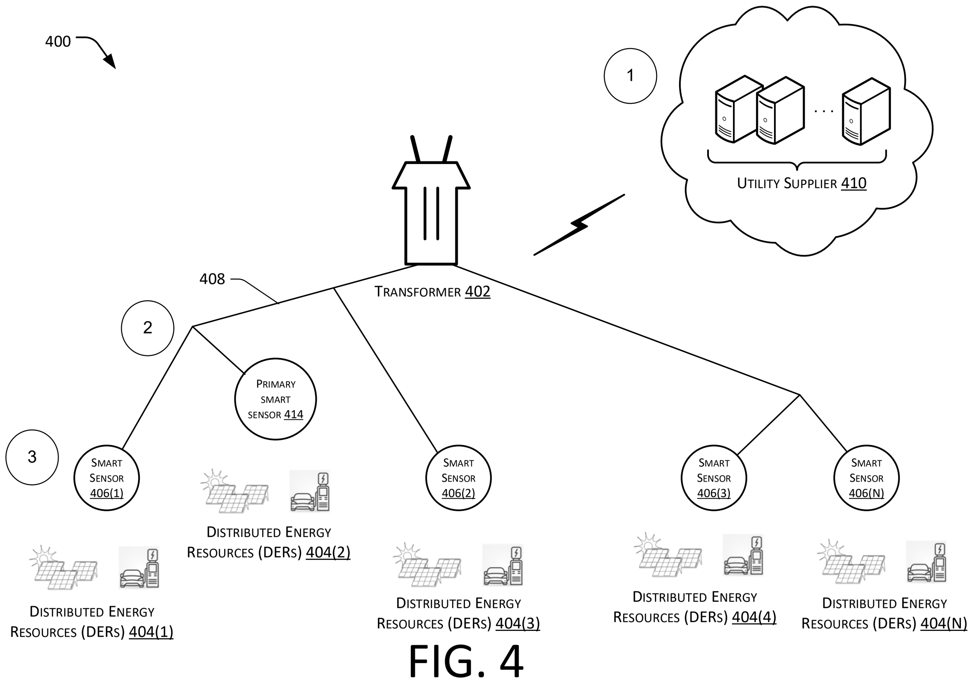

FIG. 4 is a diagram illustrating an example networked environment or architecture 400 including one or more utility meters or other smart sensors 406(1), 406(2), 406(3), ... 406(N) (collectively referred to as "smart sensors 406"), where N is any integer greater than or equal to 1. The smart sensors 406 may be the same or similar to the smart sensors 106 as described herein. The smart sensors 406 may be configured to collect information (e.g., resource consumption information, network traffic information, weather information, etc.) and to report the collected information to a utility supplier 410 via a wired or wireless network 412, such as the Internet, a cellular network, or the like. The utility supplier 410 and the network 412 may be the same or similar to the utility supplier 110 and the network 112, respectively. In some cases, the smart sensors 406 may be coupled to one or more distributed energy resources (DERs) 404(1), 404(2), 404(3), ... 404(N) (collectively referred to as "DERs 404"), where N is any integer greater than or equal to 1, (which may be the same or similar to the DERs 104) such as distributed generation systems. The network 412 may itself be made up of one or more other wired and/or wireless networks. In the illustrated example, a primary smart sensor 414 (which may be the same or similar to the primary smart sensor 414 acts as a root or edge node of the autonomous routing area in which the smart sensors 406 are located to relay communications from other smart sensors 406 in the autonomous routing area to the utility supplier 410 over the network. In some cases, the DERs 404 may include a photovoltaic (PV) system as a distributed generation system comprising a solar power panel, a PV battery module, and an inverter. In some cases, the transformer may provide power to the smart sensors 406 and the primary smart sensor 414 via power lines 408. In some cases, the power lines 408 may include secondary power lines carrying voltages between 120 volts and 480 volts.

In some cases, the primary smart sensor 414 may be configured to allocate a load capacity to the smart sensors 406. For example, the primary smart sensor 414 may receive, from the utility supplier (e.g., which may include a substation), a maximum load constraint associated with a network of smart utility meters (e.g., the smart sensors 406). In some examples, the primary smart sensor 414 may receive utility data from the smart sensors 406 and may determine a total transformer load associated with the transformer 402 based at least in part on the utility data. In some examples, the primary smart sensor 414 may determine a remaining transformer capacity associated with the transformer 402 based at least in part on the maximum load constraint and the total transformer load. For example, the primary smart sensor 414 may calculate a difference between the maximum load constraint and the total transformer load. In some cases, the primary smart sensor 414 may determine an allocated capacity for each smart sensor 406 based at least in part on the remaining transformer capacity and the primary smart sensor 414 may send the allocated capacity to the individual ones of the smart sensors 406. In some cases, the allocated capacity sent to each smart sensor 406 may cause the smart sensors to reduce a charging load of the DER 404 or increase the charging load of the DER 404.

The architecture 400 illustrates an example utility system hierarchy with three levels illustrated as "1," "2," and "3." At 1, the utility supplier 410 (e.g., a substation) may provide medium-voltage protection (e.g., 1000-35,000 volts) by allocating load constraints for the transformer 402. At 2, the primary smart sensor 414 may provide transformer protection and shared secondary line protection by determining allocated capacity for each smart sensor 406. At 3, premise-level and service drop protection may be provided by the smart sensors 406 by reducing a charging load of the DER 404 or increasing the charging load of the DER 404.

### Example Processes

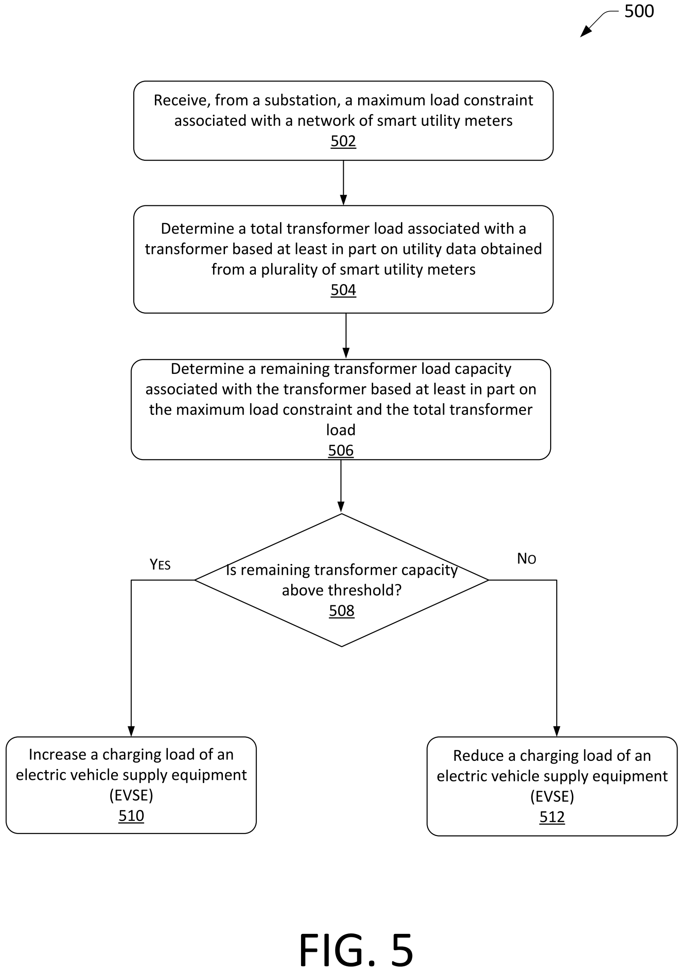

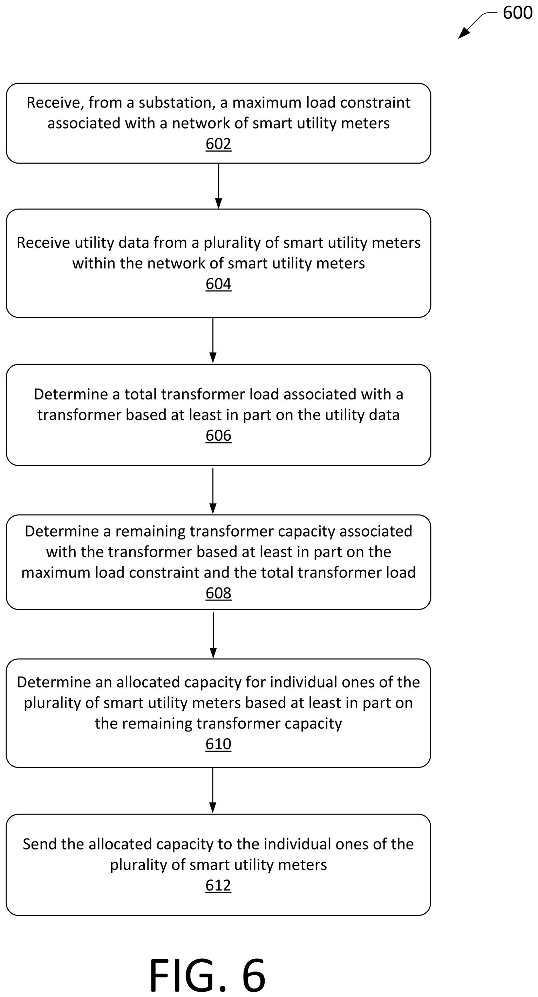

FIGS. 5 and 6 illustrate example processes 500 and 600 for employing the techniques discussed herein. For ease of illustration the processes 500 and 600 may be described as being performed by a device described herein, such as the smart sensors 106, the utility supplier 110, the transformer 102, and/or the primary smart sensor 114. However, the processes 500 and 600 may be performed by other devices (e.g., consumer computing devices, utility network computing devices, web servers, and the like). Moreover, the devices may be used to perform other processes.

The processes 500 and 600 (as well as each process described herein) are illustrated a logical flow graph, each operation of which represents a sequence of operations that can be implemented in hardware, software, or a combination thereof. In the context of software, the operations represent computer-readable instructions stored on one or more computer-readable storage media that, when executed by one or more processors, perform the recited operations. Generally, computer-readable instructions include routines, programs, objects, components, data structures, and the like that perform particular functions or implement particular abstract data types. In some contexts of hardware, the operations may be implemented (e.g., performed) in whole or in part by hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. The order in which the operations are described is not intended to be construed as a limitation, and any number of the described operations can be combined in any order and/or in parallel to implement the process. Further, any number of the described operations may be omitted.

FIG. 5 illustrates the example process 500 to determine and send an allocated capacity to one or more smart utility meters.

At 502, the process 500 may include receiving, from a substation, a maximum load constraint associated with a network of smart utility meters. For example, the primary smart sensor may be configured to allocate a load capacity to the on-site smart sensors. For example, the primary smart sensor may receive, from a utility supplier (e.g., which may include a substation), a maximum load constraint associated with a network of smart utility sensors in an autonomous routing area. The maximum load constraint may be a maximum load and/or maximum capacity that the network of smart utility sensors may collectively operate with by a transformer carrying the load. In some cases, the maximum load constraint may be determined based on one or more factors, such as temperature, (e.g., transformers generate heat during operation due to resistive losses and core losses), cooling methods (e.g., the cooling system (such as air, oil, or water cooling) determines how effectively heat is dissipated and transformers with better cooling mechanisms can handle higher loads), voltage regulation (e.g., as load increases, voltage drop occurs due to impedance in the windings and if the voltage drop is excessive, the transformer may not be able to supply the required voltage to the load), core saturation (e.g., transformers are designed for specific magnetic flux levels and if the load increases beyond a certain point, the magnetic core can become saturated, leading to increased losses and potential damage), load type (e.g., the nature of the load (resistive, inductive, or capacitive) affects how the transformer operates and inductive loads, for example, can cause additional heating and losses), short-circuit current (e.g., the ability of the transformer to withstand short-circuit without damage), regulatory and safety standards, etc. In some cases, the maximum load constraint may be specified as a Kilo-volt-amperes (kVA) rating, which reflects the transformer's capacity to handle both active and reactive power while in operation with the network of smart utility sensors without exceeding these limitations.

At 504, the process 500 may include determining a total transformer load associated with a transformer based at least in part on utility data obtained from a plurality of smart utility meters. For example, the primary smart sensor may receive utility data from the smart sensors and may determine a total transformer load associated with the transformer that is providing power to the network of smart utility sensors based at least in part on the utility data. For example, receiving the utility may include receiving data associated with electricity metering devices associated with the network of smart utility meters, a distributed generation system, electric vehicle (EV) telematics of an EV connected to an electrical grid, an EV supply equipment (EVSE) associated with the electrical grid, etc. In some cases, receiving the utility may include receiving present electricity consumption data associated with the network of smart utility meters, historical electricity consumption data associated with the network of smart utility meters, present electricity generation data associated with a distributed generation system, historical electricity generation data associated with the network of smart utility meters, etc.

At 506, the process 500 may include determine a remaining transformer load capacity associated with the transformer based at least in part on the maximum load constraint and the total transformer load. For example, the primary smart sensor may aggregate the utility data from the smart utility sensors and determine an amount of power being carried by the transformer providing electricity to the smart utility sensors.

At 508, the process 500 may include determining if the remaining transformer capacity is above a threshold. For example, the primary smart sensor may compare the aggregated utility data obtained from the smart utility sensors to the maximum load constraint allocated for the transformer and determine if there is any additional load available that the transformer can carry while remaining within the maximum load constraint. In some cases, the primary smart sensor may calculate a delta value (e.g., a difference) between the total transformer load and the maximum load constraint and may determine if the delta value is above or below a threshold value. In some cases, the primary smart sensor may be configured to default to increasing the charging load or default to decreasing the charging load in response to the delta value being equal to the threshold value.

At 510, the process 500 may include, in response to the transformer capacity being above the threshold, increasing a charging load of an electric vehicle supply equipment (EVSE). For example, the allocated capacity sent to each smart sensor may cause the smart sensors to increase the charging load of the EVSE.

At 512, the process 500 may include, in response to the transformer capacity being below the threshold, reducing a charging load of an electric vehicle supply equipment (EVSE). For example, the allocated capacity sent to each smart sensor may cause the smart sensors to reduce a charging load of an electric vehicle supply equipment (EVSE).

FIG. 6 illustrates the example process 600 to determine and send an allocated capacity to one or more smart utility meters.

At 602, the process 600 may include receiving, from a substation, a maximum load constraint associated with a network of smart utility meters. For example, the primary smart sensor may be configured to allocate a load capacity to the on-site smart sensors. For example, the primary smart sensor may receive, from a utility supplier (e.g., which may include a substation), a maximum load constraint associated with a network of smart utility sensors in an autonomous routing area. The maximum load constraint may be a maximum load and/or maximum capacity that the network of smart utility sensors may collectively operate with by a transformer carrying the load. In some cases, the maximum load constraint may be determined based on one or more factors, such as temperature, (e.g., transformers generate heat during operation due to resistive losses and core losses), cooling methods (e.g., the cooling system (such as air, oil, or water cooling) determines how effectively heat is dissipated and transformers with better cooling mechanisms can handle higher loads), voltage regulation (e.g., as load increases, voltage drop occurs due to impedance in the windings and if the voltage drop is excessive, the transformer may not be able to supply the required voltage to the load), core saturation (e.g., transformers are designed for specific magnetic flux levels and if the load increases beyond a certain point, the magnetic core can become saturated, leading to increased losses and potential damage), load type (e.g., the nature of the load (resistive, inductive, or capacitive) affects how the transformer operates and inductive loads, for example, can cause additional heating and losses), short-circuit current (e.g., the ability of the transformer to withstand short-circuit without damage), regulatory and safety standards, etc. In some cases, the maximum load constraint may be specified as a Kilo-volt-amperes (kVA) rating, which reflects the transformer's capacity to handle both active and reactive power while in operation with the network of smart utility sensors without exceeding these limitations.

At 604, the process 600 may include receiving utility data from a plurality of smart utility meters within the network of smart utility meters. For example, the primary smart sensor may receive utility data from the smart sensors and may determine a total transformer load associated with the transformer that is providing power to the network of smart utility sensors based at least in part on the utility data. For example, receiving the utility data may include receiving data associated with electricity metering devices associated with the network of smart utility meters, a distributed generation system, electric vehicle (EV) telematics of an EV connected to an electrical grid, an EV supply equipment (EVSE) associated with the electrical grid, etc. In some cases, receiving the utility data may include receiving present electricity consumption data associated with the network of smart utility meters, historical electricity consumption data associated with the network of smart utility meters, present electricity generation data associated with a distributed generation system, historical electricity generation data associated with the network of smart utility meters, etc.

At 606, the process 600 may include determining a total transformer load associated with a transformer based at least in part on the utility data. For example, the primary smart sensor may aggregate the utility data from the smart utility sensors and determine an amount of power being carried by the transformer providing electricity to the smart utility sensors.

At 608, the process 600 may include determining a remaining transformer capacity associated with the transformer based at least in part on the maximum load constraint and the total transformer load. For example, the primary smart sensor may compare the aggregated utility data obtained from the smart utility sensors to the maximum load constraint allocated for the transformer and determine if there is any additional load available that the transformer can carry while remaining within the maximum load constraint.

At 610, the process 600 may include determining an allocated capacity for individual ones of the plurality of smart utility meters based at least in part on the remaining transformer capacity. For example, the primary smart sensor may calculate a delta value (e.g., a difference) between the total transformer load and the maximum load constraint in determine if the delta value is above or below a threshold value. In some cases, the primary smart sensor may be configured to default to increasing the charging load or default to decreasing the charging load in response to the delta value being equal to the threshold value.. In response to the delta value being below the threshold value (e.g., the difference between the total transformer load and the maximum load being low), the primary smart sensor may determine that the transformer should not carry any more load and may instruct one or more smart utility sensors to refrain from adding load to the site at which they are located. In response to the delta being above the threshold value (e.g., the difference between the total transformer load and the maximum load being high), the primary smart sensor may determine that the transformer can carry more load and may instruct one or more smart utility sensors to allow additional load to the site at which they are located.

At 612, the process 600 may include sending the allocated capacity to the individual ones of the plurality of smart utility meters. For example, the allocated capacity sent to each smart sensor may cause the smart sensors to reduce a charging load of an electric vehicle supply equipment (EVSE) or increase the charging load of the EVSE.

Although the application describes embodiments having specific structural features and/or methodological acts, it is to be understood that the claims are not necessarily limited to the specific features or acts described. Rather, the specific features and acts are merely illustrative some embodiments that fall within the scope of the claims of the application. The present disclosure also includes examples according to the following numbered clauses.
Clause 1. A method comprising:
   receiving, from a substation, a maximum load constraint associated with a network of smart utility meters;
   receiving utility data from a plurality of smart utility meters within the network of smart utility meters;
   determining a total transformer load associated with a transformer based at least in part on the utility data;
   determining a remaining transformer capacity associated with the transformer based at least in part on the maximum load constraint and the total transformer load;
   determining an allocated capacity for individual ones of the plurality of smart utility meters based at least in part on the remaining transformer capacity; and
   sending the allocated capacity to the individual ones of the plurality of smart utility meters.
Clause 2. The method of clause 1, wherein the allocated capacity causes the individual ones of the plurality of smart utility meters to:
   reduce a charging load of an electric vehicle supply equipment (EVSE); or
   increase the charging load of the EVSE.
Clause 3. The method of clause 1 or 2, wherein receiving the utility data includes receiving data associated with at least one of:
   electricity metering devices associated with the network of smart utility meters,
   a distributed generation system,
   electric vehicle (EV) telematics of an EV connected to an electrical grid, or
   an EV supply equipment (EVSE) associated with the electrical grid.
Clause 4. The method according to any of clauses 1-3, further comprising receiving utility data that includes at least one of:
   present electricity consumption data associated with the network of smart utility meters,
   historical electricity consumption data associated with the network of smart utility meters,
   present electricity generation data associated with a distributed generation system, or historical electricity generation data associated with the network of smart utility meters.
Clause 5. The method according to any of clauses 1-4, wherein the maximum load constraint is based at least in part on at least one of a temperature associated with the transformer, cooling methods associated with the transformer, voltage regulation associated with the transformer, core saturation associated with the transformer, a load type, a short-circuit current associated with the transformer, or safety standards.
Clause 6. The method according to any of clauses 1-5, wherein determining the remaining transformer capacity associated with the transformer includes determining a delta value between the total transformer load and the maximum load constraint and determining if the delta value is above or below a threshold value.
Clause 7. The method of clause 6, further comprising:
   in response to the transformer capacity being above the threshold value, increasing a charging load of an electric vehicle supply equipment (EVSE); or
   in response to the transformer capacity being below the threshold value, reducing a charging load of the EVSE.
Clause 8. A smart utility meter comprising:
   at least one processor; and
   memory storing instructions that cause the at least one processor to perform operations comprising:
   receiving, from a substation, a maximum load constraint associated with a network of smart utility meters;
   receiving utility data from a plurality of additional smart utility meters within the network of smart utility meters;
   determining a total transformer load associated with a transformer based at least in part on the utility data;
   determining a remaining transformer capacity associated with the transformer based at least in part on the maximum load constraint and the total transformer load;
   determining an allocated capacity for individual ones of the plurality of smart utility meters based at least in part on the remaining transformer capacity; and
   sending the allocated capacity to the individual ones of the plurality of additional smart utility meters.
Clause 9. The smart utility meter of clause 8, wherein the allocated capacity causes the individual ones of the plurality of smart utility meters to:
   reduce a charging load of an electric vehicle supply equipment (EVSE); or
   increase the charging load of the EVSE.
Clause 10. The smart utility meter of clause 8 or clause 9, wherein receiving the utility data includes receiving data associated with at least one of:
   electricity metering devices associated with the network of smart utility meters,
   a distributed generation system,
   electric vehicle (EV) telematics of an EV connected to an electrical grid, or
   an EV supply equipment (EVSE) associated with the electrical grid.
Clause 11. The smart utility meter according to any of clauses 8-10, the operations further comprising receiving utility data that includes at least one of:
   present electricity consumption data associated with the network of smart utility meters,
   historical electricity consumption data associated with the network of smart utility meters,
   present electricity generation data associated with a distributed generation system, or historical electricity generation data associated with the network of smart utility meters.
Clause 12. The smart utility meter according to any of clauses 8-11, wherein the maximum load constraint is based at least in part on at least one of: a temperature associated with the transformer, cooling methods associated with the transformer, voltage regulation associated with the transformer, core saturation associated with the transformer, a load type, a short-circuit current associated with the transformer, or safety standards.
Clause 13. The smart utility meter according to any of clauses 8-12, wherein determining the remaining transformer capacity associated with the transformer includes determining a delta value between the total transformer load and the maximum load constraint and determining if the delta value is above or below a threshold value.
Clause 14. The smart utility meter of clause 13, the operations further comprising:
   in response to the transformer capacity being above the threshold value, increasing a charging load of an electric vehicle supply equipment (EVSE); or
   in response to the transformer capacity being below the threshold value, reducing a charging load of the EVSE.
Clause 15. A utility network system comprising:
   a substation configured to determine a maximum load constraint associated with a network of smart utility meters;
   a primary smart utility meter configured to:
   receive, from the substation, the maximum load constraint;
   receive utility data from a plurality of smart utility meters within the network of smart utility meters;
   determine a total transformer load associated with a transformer based at least in part on the utility data;
   determine a remaining transformer capacity associated with the transformer based at least in part on the maximum load constraint and the total transformer load;
   determine an allocated capacity for individual ones of the plurality of smart utility meters based at least in part on the remaining transformer capacity; and
   send the allocated capacity to the individual ones of the plurality of smart utility meters; and
   at least one smart utility meter of the plurality of smart utility meters configured to:
   receive the allocated capacity; and
   perform an action based on the allocated capacity.
Clause 16. The utility network system of clause 15, wherein the action comprises adjusting a load capacity of a distributed energy resource (DER).
Clause 17. The utility network system of clause 15 or clause 16, wherein the action comprises:
   reducing a charging load of an electric vehicle supply equipment (EVSE); or
   increasing the charging load of the EVSE.
Clause 18. The utility network system according to any of clauses 15-17, wherein receiving the utility data includes receiving data associated with at least one of:
   electricity metering devices associated with the network of smart utility meters,
   a distributed generation system,
   electric vehicle (EV) telematics of an EV connected to an electrical grid, or
   an EV supply equipment (EVSE) associated with the electrical grid.
Clause 19. The utility network system according to any of clauses 15-18, further comprising receiving utility data that includes at least one of:
   present electricity consumption data associated with the network of smart utility meters,
   historical electricity consumption data associated with the network of smart utility meters,
   present electricity generation data associated with a distributed generation system, or
   historical electricity generation data associated with the network of smart utility meters.
Clause 20. The utility network system according to any of clauses 15-19, wherein the maximum load constraint is based at least in part on at least one of a temperature associated with the transformer, cooling methods associated with the transformer, voltage regulation associated with the transformer, core saturation associated with the transformer, a load type, a short-circuit current associated with the transformer, or safety standards.
Clause 21. The utility network system according to any of clauses 15-20, wherein determining the remaining transformer capacity associated with the transformer includes determining a delta value between the total transformer load and the maximum load constraint and determining if the delta value is above or below a threshold value.
Clause 22. The utility network system according to any of clauses 15-21, the operations further comprising:
   in response to the transformer capacity being above the threshold value, increasing a charging load of an electric vehicle supply equipment (EVSE); or
   in response to the transformer capacity being below the threshold value, reducing a charging load of the EVSE.

## Claims

1. A method comprising:
receiving, from a substation, a maximum load constraint associated with a network of smart utility meters;
receiving utility data from a plurality of smart utility meters within the network of smart utility meters;
determining a total transformer load associated with a transformer based at least in part on the utility data;
determining a remaining transformer capacity associated with the transformer based at least in part on the maximum load constraint and the total transformer load;
determining an allocated capacity for individual ones of the plurality of smart utility meters based at least in part on the remaining transformer capacity; and
sending the allocated capacity to the individual ones of the plurality of smart utility meters.

2. The method of claim 1, wherein the allocated capacity causes the individual ones of the plurality of smart utility meters to:
reduce a charging load of an electric vehicle supply equipment (EVSE); or
increase the charging load of the EVSE.

3. The method of claim 1 or claim 2, wherein receiving the utility data includes receiving data associated with at least one of:
electricity metering devices associated with the network of smart utility meters,
a distributed generation system,
electric vehicle (EV) telematics of an EV connected to an electrical grid, or
an EV supply equipment (EVSE) associated with the electrical grid.

4. The method of any preceding claim, further comprising receiving utility data that includes at least one of:
present electricity consumption data associated with the network of smart utility meters,
historical electricity consumption data associated with the network of smart utility meters,
present electricity generation data associated with a distributed generation system, or
historical electricity generation data associated with the network of smart utility meters.

5. The method of any preceding claim, wherein the maximum load constraint is based at least in part on at least one of a temperature associated with the transformer, cooling methods associated with the transformer, voltage regulation associated with the transformer, core saturation associated with the transformer, a load type, a short-circuit current associated with the transformer, or safety standards.

6. The method of any preceding claim, wherein determining the remaining transformer capacity associated with the transformer includes determining a delta value between the total transformer load and the maximum load constraint and determining if the delta value is above or below a threshold value.

7. The method of claim 6, further comprising:
in response to the transformer capacity being above the threshold value, increasing a charging load of an electric vehicle supply equipment (EVSE); or
in response to the transformer capacity being below the threshold value, reducing a charging load of the EVSE.

8. A smart utility meter comprising:
at least one processor; and
memory storing instructions that cause the at least one processor to perform operations comprising:
receiving, from a substation, a maximum load constraint associated with a network of smart utility meters;
receiving utility data from a plurality of additional smart utility meters within the network of smart utility meters;
determining a total transformer load associated with a transformer based at least in part on the utility data;
determining a remaining transformer capacity associated with the transformer based at least in part on the maximum load constraint and the total transformer load;
determining an allocated capacity for individual ones of the plurality of smart utility meters based at least in part on the remaining transformer capacity; and
sending the allocated capacity to the individual ones of the plurality of additional smart utility meters.

9. The smart utility meter of claim 8, wherein the allocated capacity causes the individual ones of the plurality of smart utility meters to:
reduce a charging load of an electric vehicle supply equipment (EVSE); or
increase the charging load of the EVSE.

10. The smart utility meter of claim 8 or claim 9, wherein receiving the utility data includes receiving data associated with at least one of:
electricity metering devices associated with the network of smart utility meters,
a distributed generation system,
electric vehicle (EV) telematics of an EV connected to an electrical grid, or
an EV supply equipment (EVSE) associated with the electrical grid.

11. The smart utility meter according to any of claims 8 to 10, the operations further comprising receiving utility data that includes at least one of:
present electricity consumption data associated with the network of smart utility meters,
historical electricity consumption data associated with the network of smart utility meters,
present electricity generation data associated with a distributed generation system, or
historical electricity generation data associated with the network of smart utility meters.

12. The smart utility meter according to any of claims 8 to 11, wherein the maximum load constraint is based at least in part on at least one of: a temperature associated with the transformer, cooling methods associated with the transformer, voltage regulation associated with the transformer, core saturation associated with the transformer, a load type, a short-circuit current associated with the transformer, or safety standards.

13. The smart utility meter according to any of claims 8 to 12, wherein determining the remaining transformer capacity associated with the transformer includes determining a delta value between the total transformer load and the maximum load constraint and determining if the delta value is above or below a threshold value.

14. The smart utility meter of claim 13, the operations further comprising:
in response to the transformer capacity being above the threshold value, increasing a charging load of an electric vehicle supply equipment (EVSE); or
in response to the transformer capacity being below the threshold value, reducing a charging load of the EVSE.

15. A utility network system comprising:
a substation configured to determine a maximum load constraint associated with a network of smart utility meters; and
a primary smart utility meter according to claim 8.
